# EUROPÄISCHE PATENTSCHRIFT

(11) **EP 3 756 233 B1**
(45) Veröffentlichungstag und Bekanntmachung des Hinweises auf die Patenterteilung: **16.02.2022**
(21) Anmeldenummer: 18772715.1
(22) Anmeldetag: 21.08.2018
(51) Int. Cl.: H01Q 1/00, B64C 21/10, F15D 1/12, H01Q 1/24, H01Q 1/42

(54) **ANTENNENGEHÄUSE UND STRUKTUR FÜR ANTENNENGEHÄUSE**
ANTENNA HOUSING AND STRUCTURE FOR ANTENNA HOUSING
BOÎTIER D'ANTENNE ET STRUCTURE POUR BOÎTIER D'ANTENNE

(30) Priorität: 23.02.2018 DE 102018104216
(43) Veröffentlichungstag der Anmeldung: 30.12.2020
(73) Patentinhaber: Telefonaktiebolaget LM Ericsson (publ), 164 83 Stockholm (SE)
(72) Erfinder: WEBER, Stefan, 83139 Söchtenau (DE); STUIBLE, Eckart, 83098 Brannenburg (DE)
(74) Vertreter: Flach Bauer Stahl Patentanwälte Partnerschaft mbB
(86) Internationale Anmeldenummer: PCT/DE2018/100727
(87) Internationale Veröffentlichungsnummer: WO 2019/161818

(56) Entgegenhaltungen:
- DE-U1-202009 001 821
- JP-A- 2001 050 215
- US-A1- 2005 163 963
- US-A1- 2016 248 151
- Air Store: "Turbulator Tapes", web.archive.org, 6. September 2016 (2016-09-06), XP055521401, Gefunden im Internet: URL:http://www.air-store.eu/Tape/Turbulato r-Tapes [gefunden am 2018-11-06]

## Beschreibung

Die Erfindung betrifft ein Antennengehäuse und eine Struktur für Antennengehäuse.

Im Bereich der Mobilfunkantennen steigt der Bedarf, große Datenmengen zu übertragen. Die Antennen hierfür werden immer komplexer und benötigen trotz hoher Integrationsdichte mehr Platz. Da die Antennen in der Regel auf einem Mast befestigt sind, kann es nicht nur beim Austausch von Antennen dazu führen, dass die auf die Antennen und damit den Mast wirkende Windlast problematisch werden kann. Deshalb wird es zunehmend wichtiger, Antennen, insbesondere deren Antennengehäuse, bereitzustellen, die zur Windlastreduzierung beitragen.

Die US 2016/0248151 A1 offenbart ein Antennengehäuse mit einer dem Wind ausgesetzten Wand. In der Oberfläche dieser Wand ist ein Profil aus Vertiefungen vorgesehen, um den Luftwiderstand zu verringern. Das Profil mit den Vertiefungen ähnelt dem Profil eines Golfballs.

Die US 2005/0163963 A1 zeigt ein Gehäuseteil, das eine Beflockung aufweist, die die aerodynamischen Eigenschaften des Gehäuses verbessern soll. Die Beflockung besteht aus einzelnen, parallelen Fasern, die aus der Oberfläche des Gehäuses hervorstehen bzw. abstehend an der Oberfläche befestigt sind.

Die DE 20 2009 001 821 U1 betrifft eine Antenne mit einem passenden Antennengehäuse.

Die JP 2001 050215 A und die Website "AirStore: Turbulator Tapes", web.achrive.org, 6. September 2016, XP055521401, http://www.air-store.eu/Tape/Turbulator-Tapes, offenbaren selbstklebende Strukturen.

Deshalb ist es eine Aufgabe der Erfindung, ein Antennengehäuse und eine Struktur für Antennengehäuse bereitzustellen, die zur Windlastreduzierung bei gleichzeitig optimalen Sendeeigenschaften der HF Technik dient.

Diese Aufgabe wird erfindungsgemäß durch die Merkmale des unabhängigen Patentanspruchs gelöst. Vorteilhafte Ausgestaltungen sind Gegenstand der abhängigen Ansprüche.

Vorgeschlagen wird ein Antennengehäuse, das an zumindest einem Bereich, der nach Montage des Antennengehäuses einer Anströmung durch einen Luftstrom ausgesetzt ist, eine Struktur aufweist, die derart gebildet ist, dass sie den auftreffenden und am Gehäuse anliegenden Luftstrom an einem durch die Struktur definierten Umschlagbereich in eine turbulente Strömung überführt.

Somit wird eine Reduzierung einer am Gehäuse anliegenden Windlast im Vergleich zu demselben Antennengehäuse ohne Struktur erreicht. Die Reduzierung ist z.B. im Windkanal messbar. Aufgrund des durch die Struktur initiierten Umschlags von im Wesentlichen laminarer Luftströmung an einer durch die Struktur exakt definierten Stelle in turbulente Strömung kann der Effekt ausgenutzt werden, dass turbulente Strömung deutlich ausgeprägter dazu neigt, sich an stark gekrümmten oder divergierenden Oberflächen anzulegen und nicht abzureißen. Somit entsteht im Idealfall kein oder lediglich ein kleiner bzw. flacherer Totwasserbereich entlang des umströmten Antennengehäuses, d.h. die widerstandsarme, anliegende Umströmung ist länger am Gehäuse anliegend, es erfolgt ein späteres Ablösen. Dadurch werden der Luftwiderstand und damit die durch die Anströmung durch den Luftstrom entstehende Windlast auf das Antennengehäuse und damit auf die gesamte Antenne gesenkt. Durch die von der Struktur definierten Umschlagpunkte oder Linien wird die Intensität der asymmetrischen Wirbelablösung reduziert, welche durch eine hin und her springende "Grenzschichtblase" mit ausgelöst wird. Die asymmetrische Wirbelablösung führt zu einer Schwingungsbelastung der Antenne und der Masten, in einer u.a. von der Windgeschwindigkeit abhängenden Frequenz, welche ggf. nicht erwünschte Resonanzerscheinungen der Strukturen anregt.

Die exakt definierte Stelle bzw. der exakt definierte Bereich, an welchem der Umschlag stattfindet, wird vom Fachmann abhängig von der Art und Form des Antennengehäuses und der Art, Form und Ausgestaltung der Struktur bestimmt. Als Umschlag wird der Umschlag an der Struktur von dem am Antennengehäuse anliegenden Luftstrom in einen turbulenten Luftstrom bei jeweiligen gemessenen Windgeschwindigkeiten bezeichnet.

Ferner ist es Standard, eine an einem Körper anliegende Windlast z.B. im Windkanal mit entsprechenden Hilfsmitteln zu messen. Hierbei erfolgen Messungen der Windlast an derselben Stelle oder demselben Bereich mit unterschiedlichen Geschwindigkeiten, so dass eine entsprechende Messkurve der Windlast für unterschiedliche Windgeschwindigkeiten entsteht. Somit kann ein Vergleich zwischen der am Antennengehäuse anliegenden Windlast mit und ohne Struktur bei unterschiedlichen Windgeschwindigkeiten erfolgen, um einen direkten Vergleich zu erhalten. Der Vergleich erfolgt also nicht, indem ein Messwert der Windlast mit einem vorhergehenden Messwert des Antennengehäuses mit der Struktur verglichen wird, sondern indem ein Vergleich zu einem Messwert am Antennengehäuse ohne Struktur mit derselben Windgeschwindigkeit, vorteilhaft bei einem vorher festgelegten Referenzwert der Windgeschwindigkeit, erfolgt.

Selbstverständlich erfolgt die Messung unter denselben Umgebungsbedingungen, um eine Vergleichbarkeit herzustellen. Hierfür bietet sich der Windkanal an, da keine zusätzlichen äußeren Einflüsse zum Tragen kommen und damit eine sehr gute Vergleichbarkeit der Messungen entsteht.

In einer Ausführung ist die Struktur derart gebildet, dass die Reduzierung der Windlast mindestens an einem vorgegebenen Referenzwert, welcher eine vorgegebene Windgeschwindigkeit ist, messbar ist. Der Referenzwert, bei dem die Windlast des Antennengehäuses aufgrund z.B. gesetzlicher, interner oder andere vorgegebene Anforderungen festgelegt wird, dient zum Vergleich der Eigenschaften von Antennengehäusen zwischen den Herstellern

Die an dem Antennengehäuse angeordneten Strukturen zur Reduzierung der Windlast sind dabei vorteilhaft derart gebildet, dass sie innerhalb eines vorgegebenen Bereichs von Windgeschwindigkeiten eine Reduzierung der Windlast um mindestens 2% bei einem vorgegebenen Referenzwert im Vergleich zu einem Antennengehäuse ohne Struktur ermöglichen. Dabei liegt der Bereich, in dem eine Reduzierung der Geschwindigkeit v des Luftstroms im Vergleich zum Antennengehäuse ohne Struktur messbar ist, vorteilhafterweise mindestens innerhalb von 40 km/h ≤ v ≤ 300 km/h, oder 70 km/h ≤ v ≤ 300 km/h, oder 100 km/h ≤ v ≤ 300 km/h, oder 150 km/h ≤ v ≤ 300 km/h.

In einer Ausführung ist die Struktur an einem Bereich am Antennengehäuse angeordnet, an dem der auftreffende Luftstrom kurz vor dem Abreißen ist. Dieser Bereich kann ebenfalls abhängig von dem verwendeten Antennengehäuse und der verwendeten Struktur gewählt werden und z.B. durch Messungen im Windkanal bestimmt werden. Als Bereich, an dem der Luftstrom kurz vor dem Abreißen ist, wird ein Bereich bezeichnet, an dem der anliegende Luftstrom am Antennengehäuse ohne Struktur noch nicht abreißt. In der Nähe dieses Bereichs, z.B. innerhalb einiger Zentimeter oder Millimeter, sollte die Struktur angeordnet werden. Der Abstand zum Bereich, an dem der Luftstrom abreißt, hängt auch von der Art der Struktur, also z.B. von deren Höhe, Breite, Länge, Form etc. sowie vom gewünschten Effekt, den die Struktur erzielen soll, ab. Durch die Struktur findet dann der Umschlag in die turbulente Strömung statt. Aufgrund der sehr hohen Anzahl an Möglichkeiten der Form des Antennengehäuses und der Struktur und der daraus resultierenden Kombinationen kann hier keine exakte Stelle zur Anordnung der Struktur angegeben werden. Vielmehr ist der Bereich, an dem die Strömung abreißt, für jede Gehäuseform individuell zu bestimmen, z.B. über Versuchsreihen im Windkanal.

Vorteilhaft ist, dass der Strömungsverlauf mit einfachen Mitteln sichtbar gemacht werden kann, so dass eine einfache visuelle Bestätigung erfolgen kann, dass der Totwasserbereich ohne Struktur größer ist als mit der Struktur. Dies kann z.B. erfolgen, indem ein Faden im Windkanal von einer Position aus in Windrichtung Richtung Antenne bzw. Antennengehäuse gehalten wird. Der Faden dient hierbei zum sichtbar machen der Strömung. Bei vorhandener Struktur ist im Vergleich zu einer nicht vorhandenen Struktur an der Antenne bzw. am Gehäuse deutlich zu sehen, dass der Totwasserbereich kleiner wird. Daraus ist dann in entsprechenden Messungen zu sehen, dass sich die Windlast verkleinert.

Erfindungsgemäß ist die Struktur als Turbulator oder Mikroturbulator oder eine Kombination daraus gebildet, und als Turbulator wird folgende Struktur verwendet: mehrere benachbarte, sprunghafte und scharfkantige Erhöhungen mit zugehörigen Kanten, wobei die Kanten in mehrere zueinander in einem Winkel stehende Richtungen weisen. Durch Verwenden von definierten Störstrukturen kann der Effekt der Windlastreduzierung auf den Einsatzbereich für die Antenne abgestimmt werden.

In einer Ausführung ist die Struktur eine auf das Antennengehäuse additiv aufgebrachte oder in das Antennengehäuse eingebrachte Struktur. Wenn die Struktur direkt im Herstellungsprozess des Antennengehäuses oder nachträglich durch einen mechanischen oder chemischen Prozess gebildet wird, kann ein Montageschritt eingespart werden. Wenn die Struktur additiv auf das Antennengehäuse aufgebracht wird, kann sie zur Nachrüstung bestehender Antennengehäuse verwendet werden. Somit werden hohe Kosten für einen Austausch eingespart.

Erfindungsgemäß weist das Antennengehäuse im Wesentlichen eine Form eines Quaders mit Vorderseite, erster und zweiter Seitenwand, Rückseite, Deckel und Boden sowie Kanten dazwischen mit einem vorgegebenen Kantenradius auf, und die Struktur ist benachbart zu oder auf einer Kante zwischen zwei Seiten angeordnet. Vorteilhaft ist die Struktur als Fortsetzung des Kantenradius der Kante, an der sie angeordnet ist, gebildet und angeordnet. Hierbei entstehen ein flächenbündiger Übergang an der Lee-Seite, also der dem Luftstrom abgewandten Seite, der Kante und eine Abbruchkante an der Luv-Seite, also der dem Luftstrom zugewandten Seite.

In einer anderen Ausführung weist das Antennengehäuse im Wesentlichen eine Form eines Quaders mit Vorderseite, erster und zweiter Seitenwand, Rückseite, Deckel und Boden sowie Kanten dazwischen mit einem vorgegebenen Kantenradius auf. Die Struktur ist in einem von einer Kante zwischen zwei Seiten oder einer Seite und Deckel oder Boden beabstandeten Bereich angeordnet. In einer Ausführung ist die Struktur geradlinig oder wellenförmig oder bogenförmig durchgehend oder mindestens einmal unterbrochen über die gesamte oder eine vorgegebene Länge des Bereichs gebildet, an dem sie angeordnet ist. In einer Ausführung verläuft die Struktur geradlinig oder wellenförmig oder bogenförmig entlang einer Kante des Antennengehäuses.

Durch entsprechende Anordnung der Struktur, z.B auch mehrerer Strukturen, an unterschiedlichen Bereichen und in unterschiedlicher Art und Weise, z.B. geradlinig oder wellenförmig oder bogenförmig durchgehend oder unterbrochen und/oder in unterschiedlichen Winkeln zueinander, kann der Effekt der Windlastreduzierung verbessert und auf den Einsatzbereich für die Antenne abgestimmt werden.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein. Bevorzugte Ausführungsformen der Erfindung werden nachfolgend anhand der beigefügten Zeichnung näher erläutert.
Figur 1 zeigt ein Wirbelbild von V- förmigen Vortexgeneratoren.
Figur 2a zeigt eine schematische Ansicht der Umströmung eines Antennengehäuses ohne erfindungsgemäße Struktur 10 in einem frontalen Luftstrom.
Figur 2b zeigt eine schematische Ansicht der Umströmung eines Antennengehäuses mit zwei unterschiedlichen erfindungsgemäßen Strukturen 10 in frontaler Anströmung gemäß weiterer Ausführungen der vorliegenden Erfindung.
Figur 3 zeigt eine schematische Ansicht eines Antennengehäuses mit darin eingebrachter Struktur gemäß einer Ausführung der vorliegenden Erfindung.
Figur 4 zeigt eine schematische Ansicht eines Antennengehäuses mit darauf angeordneter Struktur, genauer komplexen Vortexelementen, gemäß einer weiteren Ausführung der vorliegenden Erfindung.
Figur 5 zeigt eine schematische Ansicht eines Antennengehäuses mit darauf angeordneter Struktur als 3D-Turbulatorin Zackenform gemäß einer weiteren Ausführung der vorliegenden Erfindung.
Figur 6 zeigt eine schematische Ansicht einer zum Deckel hin gebogenen Struktur gemäß einer weiteren Ausführung der vorliegenden Erfindung.
Figur 7 zeigt eine schematische Ansicht mehrerer an unterschiedlichen Stellen am Antennengehäuse angeordneter unterbrochener Strukturen gemäß einer weiteren Ausführung der vorliegenden Erfindung.
Figur 8 zeigt eine schematische Ansicht einer als in das Antennengehäuse eingearbeiteten 2D Turbulator ausgebildeten Struktur gemäß einer nicht erfindungsgemäßen weiteren Ausführung.
Figur 9 zeigt eine schematische Ansicht eines Antennengehäuses mit mehreren, an unterschiedlichen Bereich angeordneten Strukturen gemäß einer weiteren Ausführung der vorliegenden Erfindung.
Figur 10 zeigt eine schematische Ansicht eines Antennengehäuses mit darauf angeordneter Struktur in einseitiger Zackenform gemäß einer nicht erfindungsgemäßen weiteren Ausführung.
Figur 11 zeigt eine schematische Ansicht eines Antennengehäuses mit darauf angeordneter Struktur in Form eines Noppenbandes gemäß einer nicht erfindungsgemäßen weiteren Ausführung.
Figur 12 zeigt eine schematische Ansicht eines Antennengehäuses mit darauf angeordneter gestufter Struktur gemäß einer weiteren Ausführung der vorliegenden Erfindung.
Figur 13 zeigt eine schematische Ansicht eines Antennengehäuses mit darauf angeordneter Mikroturbulator-Struktur und eine Vergrößerung davon.

In den nachfolgenden Figurenbeschreibungen sind gleiche Elemente bzw. Funktionen mit gleichen Bezugszeichen versehen.

Die nachfolgende Beschreibung legt den Fokus auf Mobilfunkantennen, welche an einem in der Regel relativ frei stehenden Mast aufgehängt sind, da hier die größten Windlasten zu erwarten sind. Allerdings können die nachfolgend beschriebenen Ausführungen auch für an anderen Stellen angeordnete Antennen benutzt werden, auch solche, die nicht für Mobilfunk verwendet werden, auch für bewegliche Antennen. Antennengehäuse, welche die eigentliche Antenne, also insbesondere das Radom umgeben, sind in der Regel derart geformt, dass die Form des Antennengehäuses den elektrischen Eigenschaften der Antenne angepasst ist. Da das Antennengehäuse die Antenne umgibt, also den einwirkenden Umwelteinflüssen ausgesetzt ist, ist es aber auch nötig, das Antennengehäuse derart zu gestalten, dass eine Windlastreduzierung erfolgt.

Nachfolgend wird die Erfindung anhand von Antennengehäusen, welche annähernd die Form eines Quaders aufweisen, beschrieben. Andere Formen sind ebenfalls möglich, wenn die nachher beschriebene Struktur zur Verringerung der auf das Antennengehäuse wirkenden Windlast entsprechend angepasst wird.

Ein nachfolgend beschriebenes Antennengehäuse 100 weist eine Vorderwand 101, zwei Seitenwände, einen Boden, einen Deckel 102 und eine Rückwand auf. An einem Mast befestigte Antennengehäuse 100 sind in der Regel mit ihrer Rückseite daran befestigt, so dass vor allem ihre Vorderseite 101 dem auftreffenden Luftstrom, z.B. Wind, ausgesetzt ist. Wenn das Antennengehäuse 100 in einer Neigung an dem Mast befestigt ist, sind auch noch andere Bereiche davon, z.B. der Deckel 102 und/oder eine der Seitenwände einer durch einen auftreffenden Luftstrom verursachten Windlast ausgesetzt.

Problematisch kann die Windlast dann sein, wenn der Mast nicht dafür ausgelegt ist. Dies kann auftreten, wenn alte Antennen durch Antennen neuerer Generation ersetzt werden, welche aufgrund der immer komplexer werdenden Anforderungen und dem Bedarf an hohen Datenraten und damit zusätzlich benötigten Komponenten immer größer und schwerer werden. Durch die steigende Größe sind sie auch einer höheren Windlast ausgesetzt, da der Luftwiderstand alleine schon durch die größere Front der

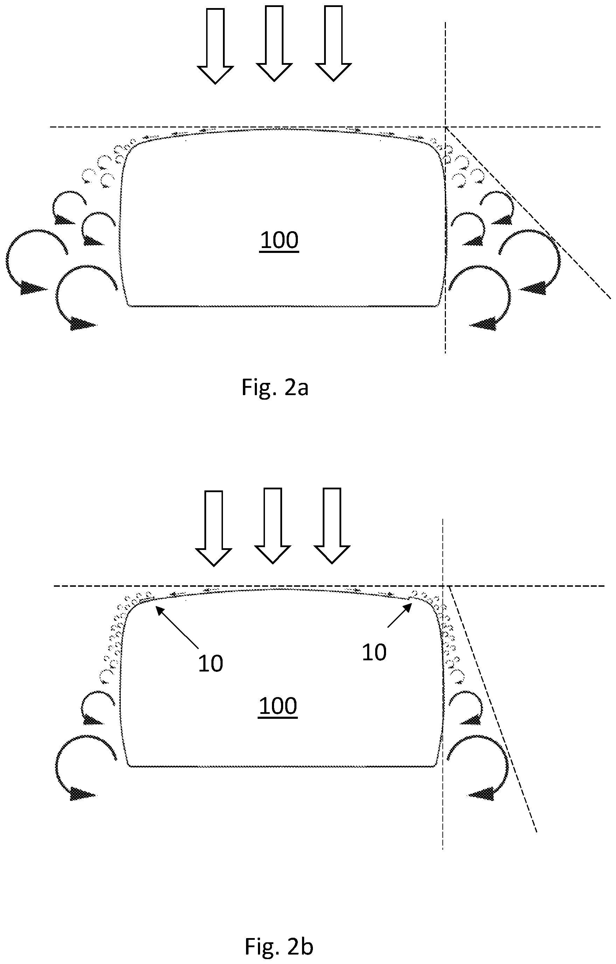

Vorderseite 101 erhöht wird. Zusätzlich ist noch der Effekt zu beobachten, dass an den Kanten z.B. von Vorderseite 101 zu einer der Seitenwände auch bei abgerundeten Kanten ein abrupter Strömungsabriss erfolgt, der zu erhöhtem Luftwiderstand und damit zu höherer Windlast aufgrund des hinter der Kante entstehenden Totwassers führt. Bei frontaler Anströmung bildet sich bei aktuell bekannten Profilen an den seitlichen Kanten häufig ein Strömungsabriss. D.h. die Strömung kann dem Profil nicht folgen und reißt ab. Je kleiner der Kantenradius ist, desto früher reißt die Strömung ab. Der Strömungsabriss führt zu einem ausgeprägten Totwassergebiet, welches einen größeren Querschnitt als die Antenne hat. Dieser Querschnitt ist relevant für den Luftwiderstand. Je früher und schärfer der Strömungsabriss stattfindet desto größer sind das Totwassergebiet und damit der Luftwiderstand, wie in Figur 2a schematisch dargestellt.

Als Totwasser wird in der Strömungslehre ein Bereich verstanden, in dem eine in der Wirbelzone eines z.B. mit Luft umströmten Körpers vorhandene Strömung entgegengesetzt zur Hauptströmungsrichtung verläuft, so dass hier in der Regel unerwünschte Effekte wie erhöhter Luftwiderstand, erzeugt werden. Ein Körper, der einer Strömung ausgesetzt ist, erfährt grundsätzlich einen Widerstand. Dieser Widerstand kann in einzelne Komponenten zerlegt werden, die verschiedene Ursachen haben. Dies ist bei stumpfen Körpern (z.B. Quadern) hauptsächlich der Strömungswiderstand. Dieser setzt sich aus Reibungswiderstand und dem Druckwiderstand zusammen. Das Totwasser ist wesentlich mit verantwortlich für den Strömungswiderstand. Die weiteren Widerstandsarten durch Oberflächenreibung, Interferenzwiderstand und induzierter Widerstand spielen bei stumpfen Körpern in der Aerodynamik eine untergeordnete Rolle.

Als Windlast wird der auf ein Objekt einwirkende Druck bzw. Sog aufgrund von auf das Objekt einwirkendem Wind bezeichnet. Dies führt zu einer Druckbelastung auf das Objekt pro Flächeneinheit.

An einer angeströmten Kontur findet abhängig von deren Form und Oberfläche naturgemäß früher oder später ein Abriss der Strömung und je nach Form auch ein Umschlag von laminarer zu turbulenter Strömung statt. Übergänge von laminarer zu turbulenter Strömung sind inkohärente Vorgänge, d.h. sie sind abhängig von der Anströmrichtung und von der Änderung der Anströmrichtung. Weiterhin ist der Umschlag von laminarer in turbulente Strömung örtlich nicht stabil, d.h. dass sich abhängig von der periodisch wechselseitig entstehenden Wirbelablösung der Punkt (genauer ist es ein Bereich, bei dem sich eine kleine Blase bildet) des Strömungsumschlages von laminar in turbulent verändert.

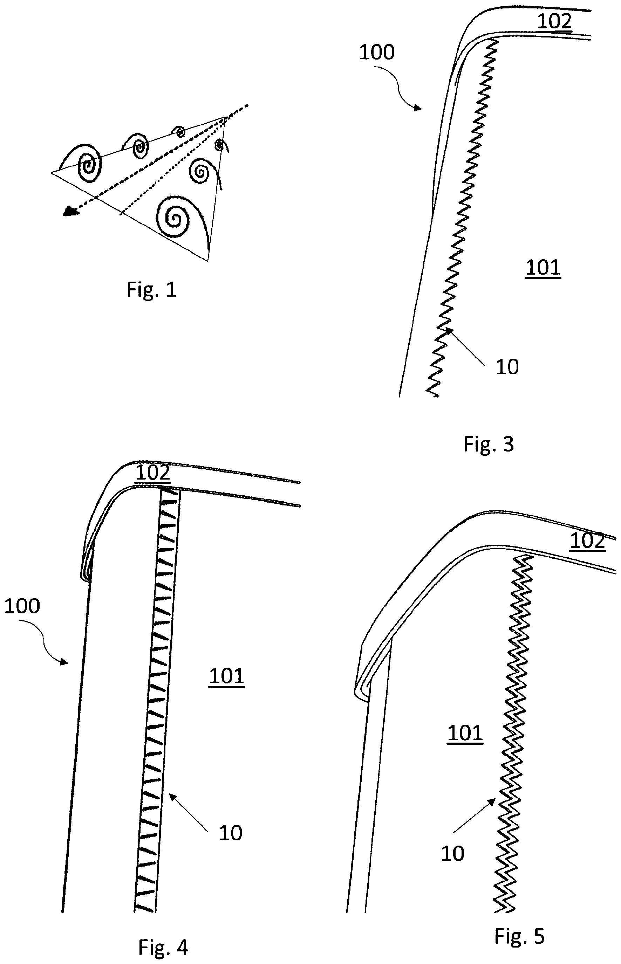

Aus dem Flugzeugbereich oder bei Windkraftanlagen sind Maßnahmen zur Beeinflussung der Aerodynamik an schlanken, umströmten Körpern wie einem Flügel bekannt. Beispielsweise werden an Anströmkanten von Segelflugzeugen, aber auch bis hin zu Passagierflugzeugen, Störstrukturen bzw. Turbulatoren angeordnet, die z.B. als sogenannte Vortexgeneratoren bezeichnet werden. Diese dienen dazu, das Auftriebs-, Ablöse- und Abreißverhalten von Luftströmungen gezielt durch Triggern des Umschlagbereichs oder -punktes von laminar zu turbulenter Umströmung zu beeinflussen und führen somit zu einer widerstandsärmeren Umströmung und damit einer Strömungsoptimierung. Es wird gezielt Energie in die turbulente Strömung eingeleitet, indem durch die Turbulatoren kleine Wirbelschleppen erzeugt werden. Wirbel sind energiereich. Je höher die Energie in der turbulenten Strömung ist, desto länger bleibt diese am Profil anliegen und reißt nicht ab. V- förmige Vortexgeneratoren erzeugen ein Wirbelbild etwa wie in Figur 1 gezeigt. Im Gegensatz zu schlanken Körpern weisen stumpfe Körper wie Antennen oder Antennengehäuse deutlich andere, nicht vergleichbare, aerodynamische Eigenschaften auf, so dass eine Übertragung der Maßnahmen wie Aufbringen einer Struktur zu völlig anderen Effekten führt. Deshalb müssen für eine Nutzung im Antennenbereich Strukturen und deren Anordnung völlig neu untersucht werden.

In Bezug auf Antennengehäuse ist es wichtig, dass der definierte Stömungsumschlag von laminarer zu turbulenter Strömung in einem möglichst großen Bereich der Anströmrichtung auf das Antennengehäuse 100 erfolgt. Ein Vorteil der V- förmigen Vortexgeneratoren im Gegensatz zu einer linienförmigen Kante ohne Zacken, wie z.B. in Figur 2a gezeigt, ist, dass die auslösende Kante für den Strömungsumschlag über einen größeren Bereich des Kantenradius erfolgt.

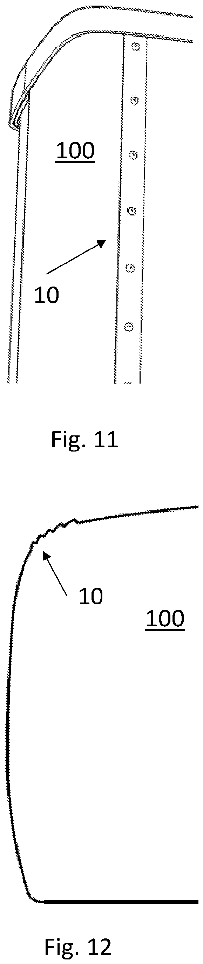

Alternativ kann die Struktur als gestufte Struktur 10, also mit mehreren linienförmig verteilten Kanten auf dem Radius, wie in Figur 12 gezeigt, gebildet werden. Somit ist für jede Anströmrichtung eine Kante für den Strömungsumschlag vorhanden. Gestufte Strukturen sind beispielsweise eine Sägezahnform, eine Form mit kegelförmigen, kegelstumpf-förmigen, rechteckigen oder ähnlichen Formen, welche eine entsprechende Erhebung aufweisen.

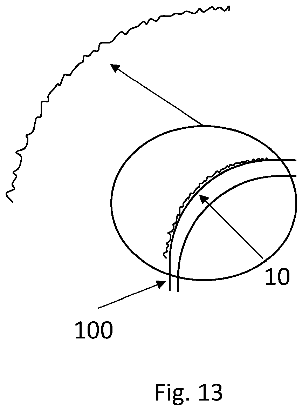

Dies könnte in einer einfachen Ausführung durch Verwenden einer Mikroturbulator-Struktur erfolgen, wie in Figur 13 gezeigt. Eine solche Struktur 10 kann eine Sandpapierstruktur sein. Diese weist grobe, auf dem Radius verteilte Körnchen auf, welche den Grenzschichtumschlag verursachen.

Das Problem der Windlastreduzierung wird durch die nachfolgend beschriebenen Strukturen 10 gelöst, die an dem Antennengehäuse 100 additiv angeordnet, wie in Figuren 4 bis 9 zu sehen, oder direkt bei der Herstellung bzw. nachträglich durch einen mechanischen oder chemischen Prozess in das Antennengehäuse 100 eingebracht sind, wie in Figur 3 zu sehen. Das Ergebnis einer Verwendung der nachfolgend beschriebenen Strukturen 10 ist in Figur 2b schematisch dargestellt.

Im Vergleich zwischen Figur 2a und Figur 2b ist der Unterschied der Umströmung des Antennengehäuses 100 deutlich zu sehen. Bei beiden Figuren ist die Anströmung durch mehrere im Wesentlichen senkrecht auf das Antennengehäuse 100 auftreffende Pfeile angedeutet. Links und rechts entlang des Antennengehäuses 100 wird das entstehende Ablösen der Strömung bzw. der Bereich des Umschlagens von laminarer in turbulente Strömung (Fig. 2b) gezeigt.

In Figur 2a ist keine erfindungsgemäße Struktur 10 an dem Antennengehäuse 100 vorhanden. Hier kann die das Antennengehäuse anströmende Luftströmung (als gerade laufende Pfeile am oberen Bereich des Antennengehäuses 100) nicht dem Eckenradius des Antennengehäuses 100 folgen und reißt bereits früh an der Ecke des Antennengehäuses 100 ab (gebogen laufende Pfeile). Dadurch wird ein großes Totwassergebiet erzeugt, welches einen hohen Widerstand erzeugt.

In Figur 2b sind zwei unterschiedliche erfindungsgemäße Strukturen 10, im Bild oben links als aufgesetzter Turbulator und oben rechts als in das Antennengehäuse 100 integrierte Turbulator-Stufe, gezeigt. Die anströmende Strömung wird vor dem natürlichen Abreißpunkt und an definierter Stelle - weil erzwungen - turbulent, wie durch die kleinen, gebogen laufenden Pfeile dargestellt. Diese turbulente Strömung folgt der Profilkontur besser als eine Strömung ohne Struktur 10, wie in Figur 2a gezeigt, und reißt erst deutlich später vollends von dem Antennengehäuse 100 ab. Es entsteht ein kleineres Totwassergebiet, also ein geringerer Strömungswiderstand.

Zur Veranschaulichung des Unterschieds der Größe des Totwassergebiets zwischen den in Figur 2a und 2b gezeigten Ausführungen sind gestrichelte Linien gezeigt. Es ist deutlich erkennbar, dass in Figur 2b das Totwassergebiet, also der Bereich zwischen den einen Winkel bildenden Linien (eine davon ist parallel zur Anströmrichtung, die andere bezeichnet die Grenze von laminarer zu turbulenter Strömung) kleiner ist als in Figur 2a. Somit ist auch die Windlast geringer, was sich wiederum messen lässt. In Versuchen z.B. im Windkanal könnte die gestrichelte Linie außen rechts in beiden Figuren als Grenzlinie bezeichnet werden. Hier würde ein Faden von einem laminaren in der Strömung liegen (links von der gestrichelten Linie bei Ansicht von Figuren 2a und 2b) in sich turbulent bewegend (rechts von der gestrichelten Linie bei Ansicht von Figuren 2a und 2b) wechseln.

Durch Verwendung der nachfolgend beschriebenen Strukturen 10 wird physikalisch der Effekt ausgenutzt, dass eine im Idealfall laminare Strömung, hier insbesondere eine Luftströmung, durch Auftreffen auf eine bestimmte Struktur gezielt an vorgegebenen Stellen oder Bereichen, nachfolgend auch als Umschlagbereich bezeichnet, in eine turbulente Strömung umgewandelt werden kann. Die Strömung kann dabei auch lediglich im Wesentlichen laminar sein, kann also auch turbulente Anteile aufweisen. Die genaue Lage und Ausführung der Struktur 10, also z.B. Höhe und Breite bzw. Ausdehnung und Länge der Struktur 10 hängen dabei unter anderem von der Form des Antennengehäuses 100 und dem Radius der Kanten zwischen zwei Flächen des Antennengehäuses 100, also z.B. zwischen Vorderseite 101 und einer Seitenwand, ab. Ebenso hängt der genaue Ort, an dem die Strömung umschlägt, also der Umschlagbereich, von der Form der Struktur 10 und des Antennengehäuses 100 ab.

Der Umschlagbereich kann dabei auch ein definierter Umschlagpunkt sein. Wesentlich ist, dass die auftreffende, im Wesentlichen laminare Luftströmung nach dem Passieren der Struktur 10 und aufgrund des Passierens durch die Struktur 10 in eine turbulente Strömung umgeschlagen ist.

Vorteilhafterweise sind die Strukturen 10 derart angeordnet und gebildet, dass ein Umschlagen von laminarer in turbulente Strömung des auftreffenden Luftstroms möglichst über einen vorgegebenen Geschwindigkeitsbereich, je nach Norm bzw. Spezifikation (z.B. DIN 1055, TIAA222G) erfolgt. Die an dem Antennengehäuse angeordneten Strukturen zur Reduzierung der Windlast sind dabei vorteilhaft derart gebildet, dass sie innerhalb eines vorgegebenen Bereichs von Windgeschwindigkeiten eine Reduzierung der Windlast im Vergleich zu einem Antennengehäuse ohne Struktur ermöglichen, z.B. wird gemäß DIN 1055 ein Bereich von 0 bis 150 km/h und bei TIAA222G ein Bereich bis 150 mph (Meilen pro Stunde), was in etwa 241 km/h entspricht, gefordert. Dabei liegt der Bereich, in dem eine Reduzierung der Geschwindigkeit v des Luftstroms im Vergleich zum Antennengehäuse ohne Struktur messbar ist, vorteilhafterweise mindestens innerhalb von 40 km/h ≤ v ≤ 300 km/h, oder 70 km/h ≤ v ≤ 300 km/h, oder 100 km/h ≤ v ≤ 300 km/h, oder 150 km/h ≤ v ≤ 300 km/h. Der obere Bereich ist abhängig von der Anwendung und kann bis zu maximal möglichen Windgeschwindigkeiten im stationären und mobilen Bereich reichen, kann also auch zukünftig mehr als 300 km/h sein.

Nachfolgend wird beispielhaft ein Antennengehäuse 100 in Form eines Quaders mit einem relativ kleinen Kantenradius von ca. 20-30 mm betrachtet. Bei anderen Formen sollte die Struktur 10 entsprechend angepasst werden, was durch Simulation oder Versuche im Windkanal möglich ist.

Figuren 3-12 zeigen Ausführungen, die sich lediglich darin unterscheiden, dass in Figuren 3 und 12 eine z.B. direkt bei der Herstellung des Antennengehäuses 100 eingebrachte Struktur 10 gezeigt ist, und in Figuren 4 bis 11 jeweils eine oder mehrere auf dem fertigen Antennengehäuse 100 additiv angeordnete Strukturen 10 in unterschiedlichen Ausführungen, aber mit demselben Effekt, gezeigt sind.

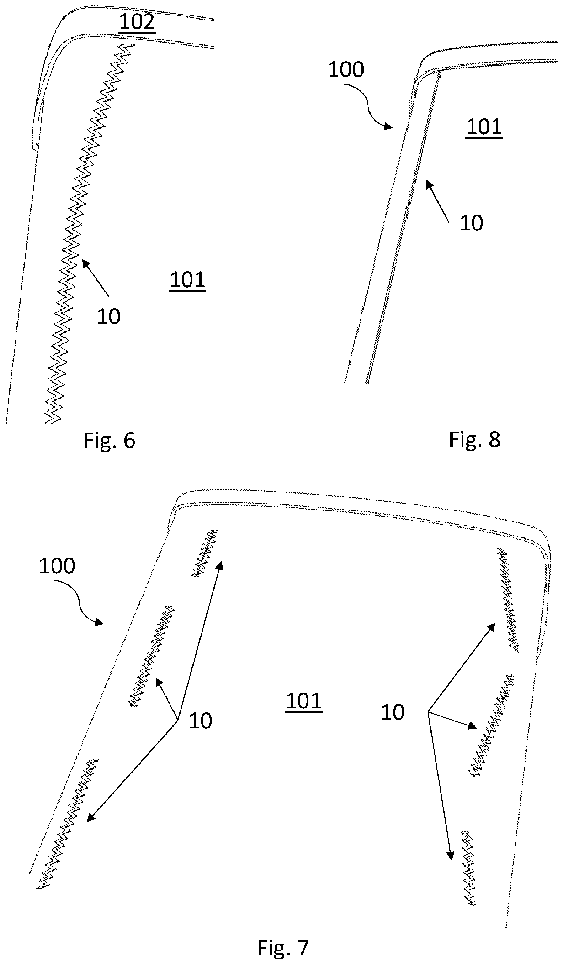

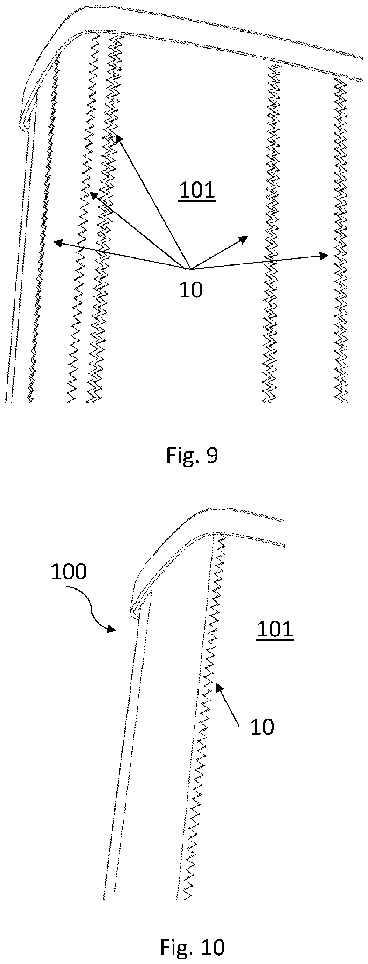

Die in Figur 6 gezeigte Struktur 10 unterscheidet sich von den in den anderen Figuren gezeigten Strukturen 10 darin, dass sie an dem zum Deckel 102 hin zulaufenden Ende einen Bogen in Richtung inneren Bereich der Vorderseite 101 aufweist. Figur 9 zeigt eine Ausführung mit mehreren an unterschiedlichen Bereichen des Antennengehäuses 100 angeordneten Strukturen 10. Eine der Strukturen 10 ist direkt auf einer Kante zwischen Vorderseite 101 und einer Seitenwand angeordnet, während zwei andere Strukturen 10 jeweils ziemlich mittig in der Seitenwand bzw. der Vorderseite 101 angeordnet sind. Eine weitere Struktur ist nahe der Kante angeordnet. Gezeigt sind hier zackenförmige Strukturen 10, wobei auch Noppenbänder, wie in Figur 11 gezeigt, oder Vortexgeneratoren, wie in Figur 4 gezeigt, oder eine Turbulatorstufe, wie in Figur 8 gezeigt, oder mehrstufige Turbulatoren, wie in Figur 12 gezeigt, verwendet werden können.

Allgemein ist die Struktur 10 als Turbulator oder Mikroturbulator gebildet. Turbulatoren können in zwei Gruppen eingeteilt werden, die auch als 2D und 3D Turbulatoren bezeichnet werden können. Die Bezeichnung 2D liegt eine Ausdehnung der Struktur lediglich in zwei Richtungen vor, während bei der 3D Struktur eine Ausdehnung auch noch in eine weitere Richtung vorliegt.

Als 2D-Turbulator wird z.B. eine Stufe, wie in Figur 8 gezeigt, bezeichnet. Als 3D-Turbulatoren werden z.B. ein Zackenband (Fig. 3, 5, 6, 10), ein Noppenband (Fig. 11), eine Stufe mit aufgesetztem Noppenband, einzeln aufgesetzte Noppen, einzeln aufgesetzte Erhöhungen oder auch Vortexgeneratoren (Fig. 4) bezeichnet. Zackenbänder oder einzeln aufgebrachte Zacken können in unterschiedlichen Ausführungen verwendet werden, z.B. als 60 Grad Zackenband oder mit anderen Winkeln. Als Noppenband oder Noppen können kegelförmige Erhöhungen oder Erhöhungen in Form eines Kegelstumpfes oder eines Rechtecks verwendet werden.

Alle Turbulatoren, sei es 2D oder 3D, können als einfache oder mehrfache Erhöhungen gebildet sein. Diese sind vorteilhafterweise sprunghaft und scharfkantig. Unter sprunghaft ist zu verstehen, dass der Höhenunterschied, also die Dicke der Struktur 10, einen Flankenwinkel von 45 Grad oder mehr, insbesondere bis zu 90 Grad, aufweist. Unter scharfkantig ist zu verstehen, dass der Kantenradius, also der Radius zwischen zwei aufeinandertreffenden Kanten, wesentlich kleiner als der Höhenunterschied, also die Dicke der Struktur 10, ist. Vorteilhafterweise liegt er bei 20% oder weniger des Höhenunterschieds, insbesondere zwischen 5% und 20%.

Ferner können die Turbulatoren geradlinig, bogenförmig, wellenförmig, unterbrochen oder in einer Kombination daraus an dem Antennengehäuse 100, z.B. an oder nahe von Kanten oder an dem Deckel oder in einem Bereich der Vorderseite 101 oder den Seitenwänden, angeordnet sein.

Die Größe der Turbulatoren ist derart zu wählen, dass keine Beeinflussung der Antennencharakteristik bzw. der Abstrahlung der Antenne und möglichst keine Vergrößerung des Antennengehäuses erfolgt. Hierbei können Turbulatoren mit Abmessungen von einem bis mehreren Zehntel Millimetern bis hin zu max. 15 mm verwendet werden.

Als Mikroturbulator werden Strukturen bezeichnet, die im Wesentlichen eine Oberflächenrauhigkeit als die des Antennengehäuses aufweisen. Außerdem weisen diese Strukturen im Gegensatz zu Turbulatoren ein eher unregelmäßiges körniges oder schuppiges Muster auf. Beispiel eines Mikroturbulators ist Sandpapier oder eine aufgeraute Oberfläche des Antennengehäuses 100. Auch Strukturen wie Haifischhaut oder Pinguinhaut wird als Mikroturbulator bezeichnet.

Auch kann die Struktur 10 als Turbulator mit einem zusätzlich darauf gebildeten Mikroturbulator gebildet sein, welcher eine von dem Antennengehäuse 100 unterschiedliche Oberfläche aufweist.

Auch können weitere Kombinationen aus den beschriebenen Strukturen 10 bzw. Profilen verwendet werden. Die Kanten können auch mit wechselnder Richtung der Kante als 3D-Turbulator in Zackenform, z.B. als Zackenband, gebildet sein. Des Weiteren ist eine Ausführung mit speziellen, an die jeweilige Ausführung angepassten, Vortexelementen möglich, wie auch in Figur 4 gezeigt. Grundsätzlich kann die Struktur 10 also eine Zackenstruktur sein, die auch ohne Verbindungsspitzen zwischen den Zacken vorteilhaft sein kann, wie vor allem in Figur 4 (3D-Vortex Turbulator) gezeigt. Die stehen gebliebenen, senkrechten Flügelelemente zur Antennenoberfläche besitzen hierbei eine strömungsgünstige Keilform, wie in Figur 4 angedeutet. Durch die Höhe der Stufe, sowie durch die Höhe und/oder Anzahl der Zacken, Flügelelemente oder Noppen, je nach Anwendung, pro Längeneinheit oder durch unterschiedliche Winkel der Spitzen der Zacken oder durch spezielle Formgebung der Vortexelemente kann der Effekt der Windlastreduzierung auf den Einsatzbereich für die Antenne abgestimmt werden. Dies ist wiederum abhängig von der Form der Antenne und der verwendeten Struktur.

Die beschriebenen Strukturen 10 zeichnen sich dadurch aus, dass sie entweder direkt bei der Herstellung des Antennengehäuses 100 oder nachträglich an genau definierte Bereiche des Antennengehäuses 100 aufgebracht bzw. dort angeordnet werden. Somit kann der oben beschriebene physikalische Effekt des Umwandelns einer im Wesentlichen laminaren Strömung in eine turbulente Strömung an definierten Umschlagbereichen bzw. Stellen ausgenutzt werden. Somit wird die Windlast gesenkt und Kosten gespart, unter anderem auch dadurch, dass die Struktur 10 so gebildet sein kann, dass sie auf bestehende Antennengehäuse 100 nachgerüstet werden kann.

Dies kann erfolgen, indem die Struktur 10 additiv vorgesehen ist, das heißt z.B. als Band oder einzeln aufgeklebt, aufgedruckt, aufgeschweißt oder in anderer Art und Weise an dem Antennengehäuse 100 befestigt werden kann. Die Art der Befestigung hängt von den zu erwartenden äußeren Gegebenheiten ab, d.h. wo die Antenne bzw. das Antennengehäuse 100 montiert werden soll. So sollte bei einer Montage ein Befestigungsmittel verwendet werden, das für die entsprechenden Bedingungen geeignet ist, z.B. für heiße oder kalte Temperaturen, große Temperaturschwankungen, hohe oder sehr geringe Luftfeuchtigkeit, hohe oder böige Windverhältnisse und daraus resultierende Schwingungen oder eine Kombination daraus etc.

Alternativ kann die Struktur 10 entweder nachträglich oder direkt während der Herstellung durch einen mechanischen oder chemischen Prozess in das Antennengehäuse 100 eingebracht werden. Dies kann z.B. erfolgen, indem eine 2D-Stufe bereits formgebunden im GFK- (Glasfaser verstärkten Kunststoff) Pultrusionswerkzeug vorhanden ist. Alternativ kann die Struktur auch z.B. durch entformbare, eingearbeitete 2D- und 3D- Strukturen im Werkzeug mittels Tiefziehen, Spritzgießen, etc., oder durch nachfolgendes formgebendes Einpressen, Eindrücken, Einrändeln, sowie nachträglich durch z.B. Einfräsen, Erodieren, etc. gebildet werden.

Die gezeigten unterschiedlichen Strukturen 10, also direkt ins Antennengehäuse 100 eingebracht oder additiv aufgebracht, durchgehend, unterbrochen oder auch gebogen, wellenförmig, bogenförmig etc. können für unterschiedliche Einsatzbereiche verwendet werden, z.B. auch abhängig von der zu erwartenden Windlast, der Art der Anbringung, also geneigt, gedreht oder gerade etc.

Grundsätzlich sind Turbulatoren Strukturen, die an einem definierten Bereich eine gezielte Oberflächenstörung bereitstellen, so dass eine auftreffende Luftströmung an diesem Bereich in eine turbulente Luftströmung umgewandelt wird. Turbulente Luftströmungen neigen dazu, näher am umströmten Objekt zu bleiben, so dass kein oder nur ein deutlich kleinerer Totwasserbereich entsteht, als wenn keine Struktur 10 verwendet wird, was in Figuren 2a und 2b im Vergleich dargestellt ist. Als Strukturen 10 können sogenannte Turbulatoren, in speziellen Fällen auch Vortexgeneratoren genannt, verwendet werden. Turbulatoren sind beispielsweise als Zackenband, z.B als 60°Zackenband (oder auch mit anderen Winkeln) oder auch als Noppenband ausgeführt, wie oben bereits beschrieben. Es können auch Noppen oder eine erhöhte Oberflächenrauhigkeit, z.B. eine Struktur wie Sandpapier, oder auch nur eine oder mehrere gerade, wellenförmige oder unterbrochene Kanten in Längsrichtung des Antennengehäuses 100 dazu verwendet werden, den beschriebenen zu erzielenden Effekt zu erzeugen.

Wenn die Struktur 10 auf ein Band aufgebracht ist, insbesondere auf ein Klebeband, kann zur Erhöhung der Klebeeigenschaften für das Zackenband auch ein einseitiges Zackenband (Dreieckform) als Struktur 10 gewählt werden, wie in Figur 10 dargestellt.

Auch kann die Struktur 10 mit einer Seite davon als Verlängerung eines Kantenradius dienen, so dass kein Sprung oder kein Rand zwischen Struktur 10 und Kante entsteht, sondern ein flächenbündiger Übergang, wie in Figur 3 gezeigt. Dabei sollte die Struktur 10, die nicht als Verlängerung der Kante dient, von der Windseite wegzeigen. Die Zackenkante stellt sich also gegen den Wind und fällt nach der Erhebung weg, was einen Unterschied zum Zackenband darstellt. Somit ist die Wirkkante, also der Umschlagbereich, die (Stirn-)Fläche der Erhebung, die der Strömung entgegensteht. Dies gilt ebenso für die in Figur 10 gezeigte Ausführung.

Die Verwendung von mehreren Strukturen 10, welche nicht auf oder nahe der Kante angeordnet sind, kann vorteilhaft sein, wenn das Antennengehäuse 100 schräg je nach Windrichtung angeströmt wird, so dass der Wind nicht frontal auf die Vorderseite 101 des Antennengehäuses 100 auftrifft. Ebenso kann eine gebogene oder wellenförmige Struktur 10, sei es lediglich zu einem Ende, z.B. zum Deckel 102, oder zu beiden Enden hin oder weg dazu dienen, eine Verbesserung bei der Reduzierung der Windlast zu erzeugen. Der Radius der Biegung ist dabei wiederum abhängig von der Form und Größe des Antennengehäuses 100, dem Ort der Anbringung, also dem Einsatzort der Antenne und den zu erwartenden äußeren Faktoren.

Ferner wird eine Struktur 10 bereitgestellt, die für die Verwendung an Antennen bzw. Antennengehäusen 100 vorgesehen und geeignet ist, den beschriebenen Effekt zu erzielen. Diese Struktur 10 ist auf das Antennengehäuse 100 angepasst, an dem sie additiv aufgebracht werden soll. Die genaue Form wird, wie oben bereits beschrieben, abhängig von der Form des Antennengehäuses 100, dem Ort der Anbringung und zu erwartenden Umgebungsbedingungen gewählt. Hierzu können Versuche im Windkanal oder Simulationen herangezogen werden. Ziel ist es, die Struktur 10 derart bereitzustellen, dass sie additiv auf das Antennengehäuse 100 aufgebracht wird, z.B. mittels Aufkleben, oder im Antennengehäuse 100 bereits bei der Herstellung integriert wird, und den auf sie strömenden im Wesentlichen laminaren Luftstrom an für die Anwendung idealer Stelle in einen turbulenten Luftstrom wandelt.

## Patentansprüche

1. Antennengehäuse (100) in Gestalt eines stumpfen Körpers, wobei das Antennengehäuse (100) an zumindest einem Bereich, der nach Montage des Antennengehäuses (100) einer Anströmung durch einen Luftstrom ausgesetzt ist, eine Struktur (10) aufweist, die derart gebildet ist, dass sie den auftreffenden und am Gehäuse anliegenden Luftstrom an einem durch die Struktur (10) definierten Umschlagbereich von einer im Wesentlichen laminaren Strömung in eine turbulente Strömung überführt, wobei
- die Struktur (10) als Turbulator gebildet ist, und wobei
- als Turbulator folgende Struktur verwendet wird: mehrere benachbarte, sprunghafte und scharfkantige Erhöhungen mit zugehörigen Kanten, wobei die Kanten in mehrere zueinander in einem Winkel stehende Richtungen weisen, und wobei
- das Antennengehäuse (100) im Wesentlichen eine Form eines Quaders mit Vorderseite (101), erster und zweiter Seitenwand, Rückseite, Deckel (102) und Boden sowie Kanten dazwischen mit einem vorgegebenen Kantenradius aufweist, und die Struktur (10) benachbart zu oder auf einer Kante zwischen zwei Seiten (101) angeordnet ist.

2. Antennengehäuse (100) nach einem der vorhergehenden Ansprüche, wobei die Struktur (10) eine auf das Antennengehäuse (100) additiv aufgebrachte oder in das Antennengehäuse (100) eingebrachte Struktur (10) ist.

3. Antennengehäuse (100) nach einem der vorhergehenden Ansprüche, wobei die Struktur (10) zusätzlich benachbart zwischen einer Seite (101) und Deckel (102) und/oder zwischen einer Seite (101) und Boden des Quaders angeordnet ist.

4. Antennengehäuse (100) nach Anspruch 3, wobei die Struktur (10) als Fortsetzung des Kantenradius der Kante, an der sie angeordnet ist, gebildet und angeordnet ist.

5. Antennengehäuse (100) nach einem der vorhergehenden Ansprüche, wobei die Struktur (10) in einem von einer Kante zwischen zwei Seiten (101) oder einer Seite (101) und Deckel (102) oder Boden beabstandeten Bereich angeordnet ist.

6. Antennengehäuse (100) nach einem der vorhergehenden Ansprüche, wobei die Struktur (10) durchgehend oder mindestens einmal unterbrochen über die gesamte oder eine vorgegebene Länge des Bereichs gebildet ist, an dem sie angeordnet ist, und/oder wobei die Struktur (10) geradlinig oder wellenförmig oder bogenförmig entlang einer Kante des Antennengehäuses (100) verläuft.

## Claims

1. Antenna housing (100) in the form of a blunt body, wherein the antenna housing (100) has a structure (10) at at least one area which is exposed to an incident flow by an air flow after mounting the antenna housing (100), said structure being formed in such a way that it converts the impinging air flow and the air flow present at the housing from a substantially laminar flow into a turbulent flow at a transition area defined by the structure (10), wherein
- the structure (10) is formed as a turbulator or a as a microturbulator or a combination thereof, and wherein
- the following structure is used as a turbulator: several adjacent, abrupt and sharpedged elevations with associated edges, wherein the edges point in several directions at an angle to each other, and wherein
- the antenna housing (100) substantially has a shape of a cuboid with front (101), first and second side walls, rear, lid (102) and bottom as well as edges in between with a predefined edge radius, and the structure (10) is arranged adjacent to or on an edge between the two sides (101).

2. Antenna housing (100) according to any of the preceding claims, wherein the structure (10) is a structure (10) that is mounted additively on the antenna housing (100) or is inserted into the antenna housing (100).

3. Antenna housing (100) according to any of the preceding claims, wherein the structure (10) is arranged additionally adjacently between a side (101) and lid (102) and/or between a side (101) and bottom of the cuboid.

4. Antenna housing (100) according to claim 3, wherein the structure (10) is formed and arranged as a continuation of the edge radius of the edge on which it is arranged.

5. Antenna housing (100) according to any of the preceding claims, wherein the structure (10) is arranged in an area spaced from an edge between two sides (101) or a side (101) and lid (102) or bottom.

6. Antenna housing (100) according to any of the preceding claims, wherein the structure (10) is formed continuously or interrupted at least once over the whole or a predefined length of the area on which it is arranged, and/or wherein the structure (10) runs in a straight line or undulately or arcuately along an edge of the antenna housing (100).

## Revendications

1. Boîtier d'antenne (100) sous la forme d'un corps aux coins arrondis, ledit boîtier d'antenne (100) présentant une structure (10) qui est située au niveau d'au moins une zone exposée à un afflux d'air sous l'effet d'un courant d'air une fois le boîtier d'antenne (100) monté, et qui est formée de manière à transformer le courant d'air incident et appliqué sur le boîtier, d'un courant essentiellement laminaire en un courant turbulent, au niveau d'une zone de transition définie par la structure (10), étant entendu que
- la structure (10) est conçue pour servir de turbulateur, et étant entendu que
- on emploie comme turbulateur la structure suivante : plusieurs élévations adjacentes abruptes et à arêtes vives, dotées d'arêtes associées, lesdites arêtes étant orientées dans plusieurs directions obliques entre elles, et étant entendu que
- le boîtier d'antenne (100) a sensiblement la forme d'un pavé droit doté d'une face avant (101), de première et deuxième parois latérales, d'une face arrière, d'un couvercle (102) et d'un fond, ainsi que d'arêtes présentes entre ces éléments et présentant un rayon d'arrondi prédéfini, et la structure (10) est disposée proche d'une arête ou sur une arête présente entre deux faces (101).

2. Boîtier d'antenne (100) selon l'une des revendications précédentes, dans lequel la structure (10) est une structure (10) rapportée sur le boîtier d'antenne (100) ou réalisée à l'intérieur du boîtier d'antenne (100).

3. Boîtier d'antenne (100) selon l'une des revendications précédentes, dans lequel la structure (10) est disposée en outre à proximité entre une face (101) et le couvercle (102) et/ou entre une face (101) et le fond du pavé droit.

4. Boîtier d'antenne (100) selon la revendication 3, dans lequel la structure (10) est formée et disposée dans la continuité du rayon d'arrondi de l'arête au niveau de laquelle elle est disposée.

5. Boîtier d'antenne (100) selon l'une des revendications précédentes, dans lequel la structure (10) est disposée dans une zone écartée d'une arête située entre deux faces (101) ou entre une face (101) et le couvercle (102) ou le fond.

6. Boîtier d'antenne (100) selon l'une des revendications précédentes, dans lequel la structure (10) est formée continument ou avec au moins une interruption sur la totalité de la longueur ou sur une longueur prédéfinie de la zone sur laquelle elle est disposée, et/ou dans lequel la structure (10) est rectiligne ou ondulée ou arquée le long d'une arête du boîtier d'antenne (100).
